# EUROPÄISCHE PATENTSCHRIFT

(11) **EP 1 938 057 B1**
(45) Veröffentlichungstag und Bekanntmachung des Hinweises auf die Patenterteilung: **15.03.2017**
(21) Anmeldenummer: 06806356.9
(22) Anmeldetag: 18.10.2006
(51) Int. Cl.: G01G 11/08

(54) **DOSIERVORRICHTUNG**
DOSING DEVICE
DISPOSITIF DE DOSAGE

(30) Priorität: 18.10.2005 DE 102005050090
(43) Veröffentlichungstag der Anmeldung: 02.07.2008
(73) Patentinhaber: FLSmidth A/S, 2500 Valby (DK)
(72) Erfinder: WOLFSCHAFFNER, Hubert, 86453 Dasing (DE)
(86) Internationale Anmeldenummer: PCT/EP2006/010037
(87) Internationale Veröffentlichungsnummer: WO 2007/045449

(56) Entgegenhaltungen:
- WO-A-98/50764
- DE-C1- 19 639 740
- US-A- 4 682 915
- US-A- 5 327 947
- US-A1- 2004 232 163

## Beschreibung

Die Erfindung betrifft eine Dosiervorrichtung zum kontinuierlichen gravimetrischen Dosieren von schüttfähigem Gut gemäss den oberbegrifflichen Merkmalen des Patentanspruchs 1.

Eine derartige Dosiervorrichtung ist aus der WO 98/50764 der Anmelderin bekannt. Hierbei ist insbesondere für die Drehrohrofenbefeuerung beim Zementbrennprozess ein Dosierrotor vorgesehen, der durch im wesentlichen radial verlaufende Mitnehmerstege unterteilt ist. Zur Sicherstellung des Austrages an der Entleeröffnung ist an dieser eine Druckluftdüse vorgesehen. An der Beschickungsseite kann ein umlaufendes Rührwerk vorgesehen sein, um die zugeführten Brennstoffe zu homogenisieren.

US 4 682 915 , DE 196 39 740 C1 und US 5 327 947 offenbaren ebenfalls Dosiervorrichtungen.

Die US 2004/0232163 A1 beschreibt ein Dosiersystem mit einem gravimetrischen Sensor und wenigstens einem Vibrationserzeuger, der direkt auf einen Trichter wirkt. Der Trichter ist hierbei an einem Rahmen befestigt, der mit dem gravimetrischen Sensor mechanisch gekoppelt ist, um das Gewicht oder die Masse von Schüttgut im Trichter zu erfassen. Daher können die Schwingungen des Vibrationserzeugers auch auf den Sensor einwirken und das Messergebnis verfälschen. Obwohl sich diese Vorrichtung insbesondere zur Dosierung von Schüttgut eignet, kann es bei groben Brennstoffen, wie gebrochener Rohkohle oder Braunkohle bei der Zuführung, aber auch der Entleerung und Beschickung nachfolgender Fördergeräte zu Problemen kommen, da sich das Schüttgut ineinander verkrallen kann, was zu Brücken- und Klumpenbildung führen kann. Die bislang verwendeten Rührwerke können diese Störungen im Materialzufluss kaum beheben und weisen zudem bei groben Materialien mit scharfen Kanten einen hohen Verschleiss auf. Diese Förderstörungen können auch erhebliche Ungenauigkeiten im Messergebnis und damit der Dosierung verursachen.

Demzufolge liegt der Erfindung die Aufgabe zugrunde, eine gattungsgemässe Dosiervorrichtung hinsichtlich des Verschleisses zu verbessern, sowie die Einsatzfähigkeit für grobes Schüttgut zu ermöglichen.

Diese Aufgabe wird gelöst mit einer Dosiervorrichtung gemäss den Merkmalen des Patentanspruchs 1.

Durch die Anordnung eines Schwingtrichters mit einem Vibrationserzeuger über der Beschickungsöffnung wird eine sichere, verschleissarme Zuführung erzielt. Zudem kann der Vibrationserzeuger so angeordnet werden, dass dieser vorwiegend in Horizontalrichtung schwingt, so dass das Messergebnis der in Vertikalrichtung messenden Kraftmesszelle nicht beeinflusst wird. Dadurch können die Schwingungen über einen entsprechend ausgelegten Kompensator auch in das Gehäuse und den darin umlaufenden Dosierrotor eingeleitet werden, wodurch die Entleerung durch hochfrequente Vibrationen gefördert wird, indem Anbackungen vermieden werden.

Zudem kann unmittelbar über dem geförderten Gutstrom des Schüttgutes die Entleerung des Gutstromes durch eine Ausblasdüse mit Heissluft oder Inertgas wesentlich erleichtert werden. Der Ausblasstrahl aus einer oder mehreren Düsen, die bevorzugt als Flachdüsen ausgebildet sind, lockert den durch die Dosiervorrichtung laufenden Gutstrom an der Entleerstation auf, wodurch im Entleerbereich eine Auflockerung des ggf. zusammenklebenden Schüttgutes erreicht wird. Somit wird eine zuverlässige Zuführung und weiterhin eine vollständige Entleerung des geförderten Gutstromes aus der Dosiervorrichtung erreicht, sowie der Gutstrom durch die Auflockerung für die Weiterförderung vorbereitet.

In zweckmässiger Weiterbildung sind die Mitnehmerstege an ihrem radial äusseren Ende mit einem Aussenring verbunden, der höher als die Mitnehmerstege sein kann, so dass hierdurch eine äussere Begrenzung gegen Abfliessen des Schüttgutes nach aussen hin und eine räumliche Begrenzung der Luftströmung der Ausblasdüse gegeben ist. Bei dieser Ausbildung ist die zentrale Rotornabe ebenfalls höher ausgebildet, so dass der Verwirbelungsbereich zwischen dem Aussenring und der Rotornabe eingegrenzt ist und somit bei der Umlaufbewegung der nach aussen hin und nach innen hin begrenzte Schüttgutstrang exakt abgetragen wird.

Weitere vorteilhafte Ausgestaltungen sind Gegenstand der Unteransprüche. Nachfolgend wird ein Ausführungsbeispiel anhand der Zeichnung näher erläutert und beschrieben. Es zeigen:
- Fig. 1: eine seitliche Vorderansicht einer Dosiervorrichtung;
- Fig. 2: eine um 90 deg. gedrehte Seitenansicht der Dosiervorrichtung;
- Fig. 3: eine vergrösserte Seitenansicht auf das Gehäuse; und
- Fig. 4: eine Schnittdarstellung entsprechend Fig. 3.

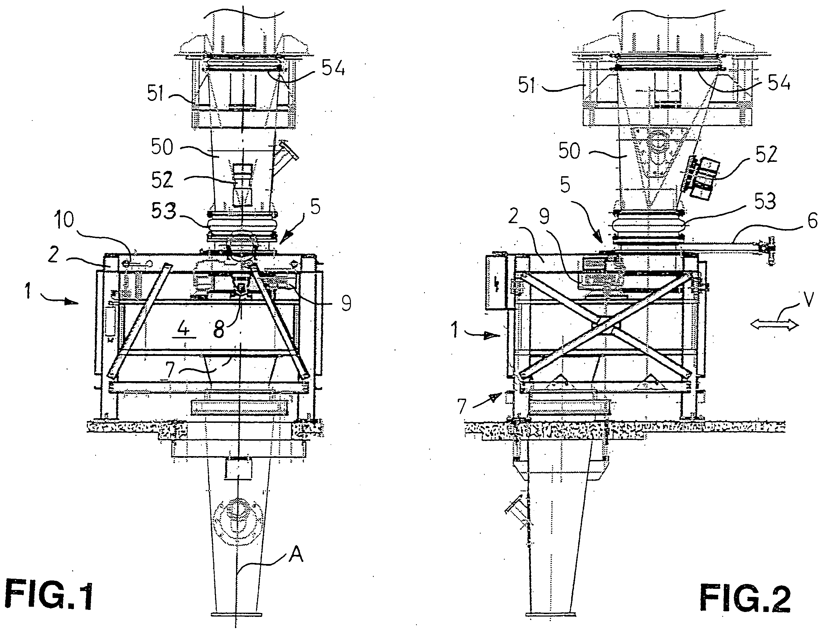

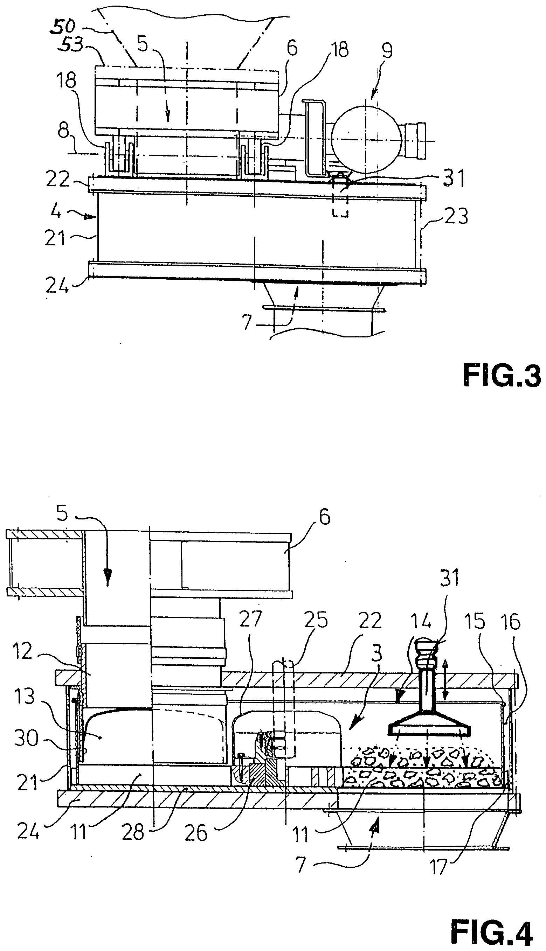

In Fig. 1 und Fig. 2 ist eine Dosiervorrichtung 1 dargestellt, die im wesentlichen aus einem Dosier-Rotor 3 (vgl. Fig. 4), besteht, der in einem Gehäuse 4 umläuft, das bis auf eine Beschickungsöffnung 5 und eine Entleerungsöffnung 7 vollständig geschlossen ist. Die Beschickungsöffnung 5 und die Entleerungsöffnung 7 sind hierbei so zueinander angeordnet, dass sich eine möglichst lange Messstrecke ergibt. Das Gehäuse 4 ist schwenkbar in einem Gestell 2 aufgehängt, wie nachfolgend näher beschrieben ist.

An der Beschickungsöffnung 5 ist ein Verschlussschieber 6 vorgesehen, dem aus einem Bunker oder Vorratsbehälter über einen Schwingtrichter 50 Schüttgut zugeführt wird. Am Schwingtrichter 50 ist hier zur Auflockerung ein Vibrationserzeuger 52 (auch als sog. Rüttler zu bezeichnen) angeordnet, der vorwiegend in Horizontalrichtung schwingt. Der Vibrationserzeuger 52 kann kontinuierlich betrieben werden oder auch bei besonders schwierigen Schüttgutarten bzw. bei zu geringen Momentanlasten am Dosier-Rotor 3 oder auch bei stark schwankenden Momentanlasten, wie dies durch Festlegung von Grenzwerten definiert und erfasst werden kann, zugeschaltet werden. Hierdurch wird eine zuverlässige Zuführung des Schüttgutes zur Dosiervorrichtung 1 sichergestellt. Der Schwingtrichter 50 ist hierbei elastisch, insbesondere über einen Kompensator 54 in einem Rahmen 51 aufgehängt. Zudem ist der Schwingtrichter 50 über einen Kompensator 53 mit dem Gehäuse 4 verbunden, was den Vibrationserzeuger 52 weitgehend entkoppelt, um das Messergebnis nicht zu beeinflussen, jedoch einen gewissen Schwingungsanteil, insbesondere in Horizontalrichtung (vgl. Pfeil V in Fig. 2) noch durchlässt, um so auch in Gehäuse 4 und dem darin umlaufenden Dosier-Rotor 3 Vibrationen zu erzeugen. Hierdurch können Anbackungen vermieden werden, sowie auch die Entleerung verbessert werden.

Wie in Fig. 3 vergrössert dargestellt, sind unterhalb des Schiebers 6 zur Bildung einer Schwenkachse 8, um die das Gehäuse 4 unter Gutbelastung verschwenken kann, zwei Schwenklager 18 vorgesehen. Diese Schwenkachse 8 verläuft -in Draufsicht gesehen- durch die Mitte der oberen Beschickungsöffnung 5 und der unteren Entleerungsöffnung 7, um Fehlereinflüsse durch die Gutzufuhr bzw. Entleerung zu eliminieren. Ebenso ist der Vibrationserzeuger bevorzugt auf dieser Vertikalachse A angeordnet, wie in Fig. 1 dargestellt ist.

Zum Antrieb des Rotors 3 der Dosiervorrichtung 1 ist eine Antriebsvorrichtung 9 vorgesehen, die hier beispielsweise aus einem nicht näher bezeichneten Elektromotor und einem Kegelradgetriebe besteht, dessen Ausgang in eine vertikale Antriebsachse 25 (vgl. Fig. 4) für den Rotor 3 mündet. Die Antriebsvorrichtung 9 ist hierbei direkt auf das Gehäuse 4 montiert, so dass es Schwenkbewegungen um die vorstehend genannte Schwenkachse 8 mit vollziehen kann. Bei der Schwenkbewegung um die Schwenkachse 8, wie sie durch die Gutzufuhr und die Förderung entlang der Messstrecke 2 verursacht wird, stützt sich das Gehäuse 4 auf eine im Gestell 2 stationär angeordnete Kraftmessvorrichtung 10 ab, die beispielsweise über einen Zuganker mit dem Gehäuse 4 verbunden ist.

Als Kraftmessvorrichtung 10 können verschiedene Arten von Kraftmesszellen Verwendung finden, bevorzugt werden jedoch weglos arbeitende Messgeber, wie Dehnmessstreifen, Scherkraftgeber oder dergleichen verwendet. Die jeweilige Masse des über die Messstrecke geförderten Gutstromes wird hierbei erfasst und das Produkt aus Momentlast und Fördergeschwindigkeit zur Ermittlung des Durchsatzes gebildet. Zur Änderung des Durchsatzes oder zur Einstellung einer Sollmenge wird über eine nicht näher dargestellte, an sich bekannte Regelvorrichtung die Drehzahl der Antriebsvorrichtung 9 und damit des Rotors 3 nachgeregelt.

Wie aus Fig. 4 ersichtlich ist, nehmen sternförmig verlaufende Mitnehmerstege 11 des Rotors 3 lediglich eine Teilhöhe der Innenhöhe des Gehäuses 4 ein. Zur Beschickung ist durch die obere Gehäusewand 22 des Gehäuses 4 ein Zuführstutzen 12 hindurchgeführt, der eine untere Auslassöffnung 13 aufweist, die bevorzugt durch einen schrägen Anschnitt des Zuführstutzens 12 gebildet ist. Die sternförmig angeordneten Mitnehmerstege 11 des Rotors 3 sind hier durch einen Aussenring 14 miteinander verbunden, so dass sich eine hohe Stabilität des Rotors 3 ergibt.

Zudem bewirkt der aussen bis nahezu zur oberen Gehäusewand 22 hochgezogene Aussenring 14, dass das durch die Beschickungsöffnung 5 im Zuführstutzen 12 zugeführte Schüttgut nicht nach aussen hin abwandern kann. Entsprechendes gilt für den weiter unten beschriebenen Ausblasstrahl zur Auflockerung des Schüttgutes.

Der obere Rand 15 des Aussenrings 14 ist in bevorzugter Ausgestaltung nach aussen hin umgebördelt, so dass dieser mit geringem Spiel bezüglich des Gehäusemantels 21 umläuft. Zwischen dem Aussenring 14 und dem Gehäusemantel 21 wird hierbei ein Umfangsspalt 16 gebildet, in dem sich ggf. feinere Partikel des Schüttgutes ansammeln können, um mittels Hilfsmitnehmern 17 zur Entleerungsöffnung 7 mittransportiert zu werden. Die Hilfsmitnehmer 17 sind bevorzugt durch die äusseren Enden der Mitnehmerstege 11 gebildet, indem beispielsweise der Aussenring 14 nur auf die Mitnehmerstege 11 aufgesetzt ist. Es sei darauf hingewiesen, dass die Entleerungsöffnung 7 in radialer Richtung etwas über den Aussenrand 14 hinausragt und somit mit dem Umfangsspalt 16 in Verbindung steht, so dass auch in dem Umfangsspalt 16 befindliches Gut an der Entleerungsöffnung 7 nach unten herausfällt und somit hinsichtlich der Momentanlast an der Messstrecke mit erfasst wird. In dem Umfangsspalt 16 herrscht zudem wie im Entleerbereich ein Überdruck, so dass der Austrag erleichtert wird bzw. ein Festbacken von Partikeln verhindert wird.

Wie vorstehend erwähnt, ist in Fig. 2 eine Seitenansicht der Dosiervorrichtung 1 gezeigt, wobei insbesondere der Verlauf der durch die Schwenklager 18 gebildeten Schwenkachse 8 ersichtlich ist. Zudem ist der Aufbau des Gehäuses 4 mit dem Gehäusemantel 21, einer oberen Gehäusewand 22 und einer unteren Gehäusewand 24 dargestellt, die beispielsweise über Schraubverbindungen 23 mit der oberen Gehäusewand 22 verbunden ist. Zudem ist in Strich-Punkt-Linien oberhalb der Beschickungsöffnung 5 der Schwingtrichter 50 mit dem unteren Kompensator 53 angedeutet. Die in Fig. 1 angedeutete Kraftmessvorrichtung 10 ist zur Erzielung einer möglichst grossen, effektiven Hebellänge am Umfang des Gehäuses 4 angeordnet, kann jedoch auch noch weiter entfernt oder näher zur Schwenkachse 8 hin befestigt sein.

In Fig. 4 ist aus der Schnittdarstellung neben den bereits beschriebenen Bauteilen der Dosiervorrichtung 1 auch die Antriebswelle 25 in Strichlinien eingezeichnet, die von dem Kegelradgetriebe der Antriebsvorrichtung 9 ausgeht und mit einer Rotornabe 26 in Verbindung steht, an der die Mitnehmerstege 11 sternförmig angeordnet sind. Über der Rotornabe 26 befindet sich eine Rotornaben-Abdeckung 27, die eine ähnliche Höhe wie der Aussenring 14 einnimmt, so dass der Zuführstutzen 12 zwischen diesem und der Rotornaben-Abdeckung 27 weitgehend eingepasst ist sowie der Entleerbereich hierdurch abgegrenzt ist. Die Mitnehmerstege 11 laufen auf einer Schleissplatte 28 um, die auf der unteren Gehäusewand 24 befestigt ist.

Das untere Endstück 30 des in das Gehäuse 4 hineinragenden Zuführstutzens 12 erstreckt sich in bevorzugter Ausführung mit seiner in Förderrichtung weisenden Hälfte bis zu der Umlaufebene der Mitnehmerstege 11, während an seiner in Förderrichtung weisenden Hälfte eine schräg abgeschnittene Auslassöffnung 13 vorgesehen ist. Dadurch wird beim Umlaufbetrieb der Dosiervorrichtung 1 ein strangförmiger Gutstrom über den Mitnehmerstegen 11 ausgebildet und dieser zur Entleerungsöffnung 7 geführt wird. Der Zuführstutzen 12 ist in der oberen Gehäusewand 22 befestigt und über ein elastisches Zwischenstück, beispielsweise einen Gummiring, mit dem Stutzen des Schiebers 6 bzw. Schwingtrichters 50 verbunden. Auch das Endstück 30 ist bevorzugt als elastisches Endstück ausgebildet, so dass dieses Endstück 30 des Zuführstutzens 12 gegenüber grösseren Klumpen des groben Brennstoffes nachgiebig gestaltet ist.

Wesentlich ist hierbei auch die Anordnung einer Ausblasdüse 31 unmittelbar über dem Gutstrom an der Entleerungsöffnung 7. Hierdurch wird Heissluft oder Inertgas unter Druck zugeführt, wodurch der Gutstrom nach unten hin ausgeblasen wird. Dabei wird zum einen der Gutstrom aufgelockert und durchgemischt. Durch die Heissluft wird gegenüber der bislang bekannten Druckluft erzielt, dass sich Anbackungen besser lösen und zudem das Innere des Gehäuses 4 gereinigt wird. Zugleich wird dadurch eine Gassperre gegenüber den nachgeschalteten Einheiten erreicht, z.B. einer pneumatischen Förderleitung zu einem nicht dargestellten Drehrohrofen für die Zementherstellung oder einer unter Überdruck arbeitenden Mühle.

Es sei darauf hingewiesen, dass die Mitnehmerstege 11 des Rotors 3 neben der hier gezeichneten exakten radialen Ausrichtung auch leicht gekrümmt oder (in Förderrichtung) gewölbt ausgeführt sein können. Ebenso kann zur Durchführung von Kontrollmessungen die Dosiervorrichtung 1 mit ihrem Gestell 2 noch zusätzlich auf (nicht dargestellten) Wägezellen abgestützt sein, die im Fussbereich des Gestells 2 vorgesehen sind. Diese Kontroll-Wägezellen stehen dabei mit der oben erwähnten Steuer-/Regeleinrichtung in Verbindung, so dass je nach Führungsgrösse (Brennstoffbedarf) die Nachförderung aus dem bzw. den Vorratsbehälter(-n) erfolgen kann.

## Patentansprüche

1. Dosiervorrichtung zum kontinuierlichen, gravimetrischen Dosieren von schüttfähigem Gut, insbesondere groben Brennstoffen, wobei die Dosiervorrichtung (1) ein Gehäuse (4) mit einem darin umlaufenden Rotor (3) umfasst und ein Gutstrom in dem Gehäuse (4) mit dem um eine vertikale Drehachse angetriebenen Rotor (3) unter Ermittlung der Momentanlast über eine Messstrecke von einer Beschickungsöffnung (5) zu einer Entleerungsöffnung (7) gefördert wird, sowie mit einer Kraftmessvorrichtung (10), die die Momentanlast des über den Rotor (3) geführten Gutstromes erfasst und die mit dem Gehäuse (4) verbunden ist, das an einer Schwenkachse (8) gelagert ist, welche - in Draufsicht gesehen - durch die Mitte der Beschickungsöffnung (5) verläuft, **dadurch gekennzeichnet, dass** über der Beschickungsöffnung (5) des Rotors (3) ein Schwingtrichter (50) mit einem Vibrationserzeuger (52) vorgesehen ist, wobei der Vibrationserzeuger (52) oberhalb der Beschickungsöffnung (5) und der Schwenkachse (8) in Vertikalrichtung (A) über der Schwenkachse (8) des Gehäuses (4) angeordnet ist.

2. Dosiervorrichtung nach Anspruch 1, **dadurch gekennzeichnet, dass** der Schwingtrichter (50) mit einem Kompensator (54) in einem Rahmen (51) hängend, insbesondere in allen Raumrichtungen frei schwingend angeordnet ist.

3. Dosiervorrichtung nach Anspruch 1 oder 2, **dadurch gekennzeichnet, dass** der Schwingtrichter (50) mit einem Kompensator (53) mit dem Gehäuse (4) verbunden ist.

4. Dosiervorrichtung nach einem der Ansprüche 1 bis 3, **dadurch gekennzeichnet, dass** der Vibrationserzeuger (52) vorwiegend in Horizontalebene schwingend angeordnet ist.

5. Dosiervorrichtung nach einem der Ansprüche 1 bis 4, **dadurch gekennzeichnet, dass** der Vibrationserzeuger (52) kontinuierlich betrieben ist.

6. Dosiervorrichtung nach einem der Ansprüche 1 bis 5, **dadurch gekennzeichnet, dass** der Rotor (3) mit einem Außenring (14) unter Bildung eines Umfangspaltes (16) einen geringfügig kleineren Durchmesser als den Durchmesser des Gehäuses (4) aufweist und der obere Rand (15) zur Abdeckung des Umfangspaltes (16) nach außen verlaufend ausgebildet ist.

7. Dosiervorrichtung nach Anspruch 6, **dadurch gekennzeichnet, dass** im Umfangspalt (16) Hilfsmitnehmer (17) vorgesehen sind, wobei die Entleerungsöffnung (7) in radialer Richtung über den Außenrand (14) hinausragt und mit dem Umfangspalt (16) in Verbindung steht.

8. Dosiervorrichtung nach einem der Ansprüche 1 bis 7, **dadurch gekennzeichnet, dass** über der Entleerungsöffnung (7) eine nach unten ausgerichtete Ausblasdüse (31) angeordnet ist, die insbesondere mit Inertgas oder Heißluft betrieben ist.

9. Dosiervorrichtung nach einem der Ansprüche 1 bis 8, **dadurch gekennzeichnet, dass** die Dosiervorrichtung (1) für Kontrollwägungen mit ihrem Gestell (2) auf Wägezellen abgestützt ist.

10. Dosiervorrichtung nach einem der Ansprüche 1 bis 9, **dadurch gekennzeichnet, dass** der Schwingtrichter (50) bei einer zu geringen oder außerhalb von festlegbaren Grenzwerten schwankenden Momentanlasten aktivierbar ist.

## Claims

1. A dosing device for continuous, gravimetric dosing of pourable material, especially rough fuels, whereby the dosing device (1) comprises a housing (4) with a therein revolving rotor (3) and a material flow in the housing (4) is conveyed from a charging opening (5) to an emptying opening (7) by the rotor (3) that is powered around a vertical rotating axis by determining the instantaneous load across a measured distance, as well as with a force measuring device (10) that determines the instantaneous load of material flow guided by the rotor (3) and that is connected to the housing (4), that is mounted at a pivot axis (8), which - when seen from above - runs through the centre of the charging opening (5), **characterised in that** a vibrating funnel (50) is provided above the charging opening (5) of the rotor (3) with a vibration generator (52), whereby the vibration generator (52) is located above the charging opening (5) and the pivot axis (8) is located in the vertical direction (A) above the pivot axis (8) of the housing (4).

2. Dosing device according to claim 1, **characterised in that** the vibrating funnel (50) hanging together with a compensator (54) in a frame (51), is located to freely oscillate especially in all spatial directions.

3. Dosing device according to claim 1 or 2, **characterised in that** the vibrating funnel (50) with the compensator (53) is connected to the housing (4).

4. Dosing device according to one of claims 1 to 3, **characterised in that** the vibration generator (52) is located to oscillate predominantly in the horizontal plane.

5. Dosing device according to one of claims 1 to 4, **characterised in that** the vibration generator (52) is operated continuously.

6. Dosing device according to one of claims 1 to 5, **characterised in that** the rotor (3) together with a peripheral ring (14) and by forming a circumferential gap (16) exhibits a minimally smaller diameter than the diameter of the housing (4) and the upper rim (15) is designed to run on the outside in order to cover the circumferential gap (16).

7. Dosing device according to claim 6, **characterised in that** assistant cams (17) are provided in the circumferential gap (16), whereby the emptying opening (7) projects in a radial direction beyond the outer edge (14) and is connected to the circumferential gap (16).

8. Dosing device according to one of claims 1 to 7, **characterised in that** a blast nozzle (31) that is downward facing and that is, in particular, operated by inert gas or by hot air, is located above the emptying opening (7).

9. Dosing device according to one of claims 1 to 8, **characterised in that** the dosing device (1) is supported on weighing cells with its base frame (2) for check weighing.

10. Dosing device according to one of claims 1 to 9, **characterised in that** the vibrating funnel (50) can be activated by instantaneous loads that vary in the case of threshold values that are too minimal or that lie outside definable threshold values.

## Revendications

1. Dispositif de dosage pour assurer le dosage gravimétrique en continu de produits en vrac, notamment de combustibles grossiers, le dispositif de dosage (1) comprenant un carter (4) dans lequel est en révolution un rotor (3), et un écoulement de produit étant véhiculé dans le carter (4) d'une ouverture d'alimentation (5) vers une ouverture de vidage (7) à l'aide du rotor (3) entrainé autour d'un axe de rotation vertical, en déterminant la charge instantanée sur un parcours de mesure, le dispositif de dosage comprenant également un dispositif de mesure de force (10), qui relève la charge instantanée de l'écoulement de produit véhiculé par l'intermédiaire du rotor (3), et est relié au carter (4) monté sur un axe de pivotement (8), qui vu dans une vue de dessus, s'étend de manière à passer par le centre de l'ouverture d'alimentation (5),
**caractérisé en ce qu'**au-dessus de l'ouverture d'alimentation (5) du rotor (3) est prévue une trémie oscillante (50) avec un générateur de vibrations (52), le générateur de vibrations (52) étant agencé à un niveau au-dessus de l'ouverture d'alimentation (5) et de l'axe de pivotement (8), dans la direction verticale (A) au-dessus de l'axe de pivotement (8) du carter (4).

2. Dispositif de dosage selon la revendication 1,
**caractérisé en ce que** la trémie oscillante (50) est agencé de manière suspendue dans un cadre (51) à l'aide d'un compensateur (54), notamment de façon librement oscillante dans toutes les directions spatiales.

3. Dispositif de dosage selon la revendication 1 ou la revendication 2, **caractérisé en ce que** la trémie oscillante (50) est reliée au carter (4) à l'aide d'un compensateur (53).

4. Dispositif de dosage selon l'une des revendications 1 à 3, **caractérisé en ce que** le générateur de vibrations (52) est agencé de manière à osciller principalement dans le plan horizontal.

5. Dispositif de dosage selon l'une des revendications 1 à 4, **caractérisé en ce que** le générateur de vibrations (52) fonctionne en continu.

6. Dispositif de dosage selon l'une des revendications 1 à 5, **caractérisé en ce que** le rotor (3) avec un anneau extérieur (14), présente un diamètre légèrement inférieur au diamètre du carter (4), en formant un interstice périphérique (16), et le bord supérieur (15) est réalisé de manière à s'étendre vers l'extérieur pour couvrir l'interstice périphérique (16).

7. Dispositif de dosage selon la revendication 6,
**caractérisé en ce que** dans l'interstice périphérique (16) sont prévus des entraîneurs auxiliaires (17), l'ouverture de vidage (7) dépassant, dans la direction radiale, du bord extérieur (14), vers l'extérieur, et étant en communication avec l'interstice périphérique (16).

8. Dispositif de dosage selon l'une des revendications 1 à 7, **caractérisé en ce qu'**au-dessus de l'ouverture de vidage (7) est agencée une buse de soufflage (31) dirigée vers le bas, que l'on fait fonctionner notamment avec un gaz inerte ou de l'air chaud.

9. Dispositif de dosage selon l'une des revendications 1 à 8, **caractérisé en ce que** le dispositif de dosage (1) s'appuie avec sa structure de châssis (2) sur des cellules de pesée, en vue d'effectuer des pesées de contrôle.

10. Dispositif de dosage selon l'une des revendications 1 à 9, **caractérisé en ce que** la trémie oscillante (50) peut être mise en action dans le cas d'une charge instantanée trop faible ou de charges instantanées variant en-dehors de valeurs limites pouvant être fixées.
